# EUROPEAN PATENT APPLICATION

(11) **EP 2 546 201 A1**
(43) Date of publication of application: **16.01.2013**
(21) Application number: 11382233.2
(22) Date of filing: 12.07.2011
(51) Int. Cl.: C02F 1/44, B01D 61/06, B01D 61/02

(54) **Filtration or desalination plant for reverse osmosis of salt or brackish water**

(71) Applicant: Golmayo Fernández, Manuel, 28033 Madrid (ES)
(72) Inventor: Golmayo Fernández, Manuel, 28033 Madrid (ES); Golmayo Fernández, Antonio, 28033 Madrid (ES)
(74) Representative: ABG Patentes, S.L.

(57) **Abstract**

The present invention is addressed to a salt or brackish water reverse osmosis filtration or desalination plant with a configuration such that it is possible to recover high pressure energy from the brine outflow. It is also an objective of the invention the method which allows, during operation, to get the filtration or desalination while achieving this energy recovery. The basic working method establishes a discontinuous process in which a long pipe receives a determined volume of water to be filtered. This water volume is pushed to the exit of the main feed impulsion pump, mainly by the high pressure brine outflow, and additionally by a dimension impulsion means of small dimension, when compared to the main pump. This process is performed by using a particular way of valves switching. The pushing is finished when the volume of water to be filtered has been already introduced in the feed inlet. The discontinuous process starts again after replacing the brine that has filled the long pipe with water to be filtered. It is also objet of the invention the use of more than one pipe in order to get a continuous global behaviour in the energy recovery process.

## Description

### OBJECT OF THE INVENTION

The present invention is directed to a reverse osmosis filtration or desalination plant of salt or brackish water, with a configuration allowing energy recovery from the high pressure brine out-flow. It is also object of the invention the method allowing the plant, in operating mode, to perform the filtration or desalination while getting that energy recovery.

The invention working basic method establishes a discontinuous process using a long pipe that receives a determined volume of water to be filtered; this water, by means of a particular system of valve switching, is driven towards the exit of the main impulsion pump (or feed impulsion means), boosted mainly by the high pressure brine flow and, additionally, by means of small dimension impulsion means, compared to the main impulsion means. Impulsion of the water in the long pipe finishes when the volume of water to be filtered has been introduced through the filter feed inlet. The discontinuous process starts again after the brine filling the tube have been replaced by a new volume of water to be filtered.

It is also an object of the invention the use of more than a pipe in order to get a global energy recovery performance in a continuous way.

### PRIOR ART

Reverse osmosis filters has two chambers separated by a porous membrane. This membrane is permeable allowing water to pass through it but their porous are small enough to avoid the pass of particles and big molecules.

When this type of membranes is manufactured to perform desalination process, porous size is calibrated to avoid even the pass of salts through it.

During the filtration process it is necessary to set a pressure difference between both sides of the membrane to overcome the osmotic pressure and to obtain an acceptable performance in the filtering process.

Reverse osmosis filters adapted to carry out a continuous filtering comprises one inlet (for the water to be filtered) and two outlets: a first outlet for desalted water (the filtered one) and a second one for the brine. Inlet gives access to the first filter chamber. The first outlet is connected to the second filter chamber containing the filtered water which has passed the membrane. The second outlet, for brine, is connected to the first chamber at the inflow way end; at this point water flow has decreased due to filtration and salts which have not passed the membrane are accumulated, so the flow salt concentration is higher.

This second brine outlet has a pressure similar to the first chamber pressure minus the loss of flow pressure due to the path through the first chamber. The brine flow is eliminated. Usually in desalination plants, water to be filtered (salt water) is taken from the sea and brine (with salt concentration higher than salt water) is thrown again to the sea but far away from the inlet, to avoid the water inflow with higher salt concentration than the sea.

As brine outflow is at high pressure, when brine is thrown away to the sea, a great deal of the energy spent in the high pressure inflow is lost. In these cases it is needed a throttle valve in the second exit to keep the high pressure and to avoid the loss of pressure in the interior of the first chamber.

To recover part of this energy in the high pressure brine flow, the state of the art proposes the use of several methods and devices allowing this recovery.

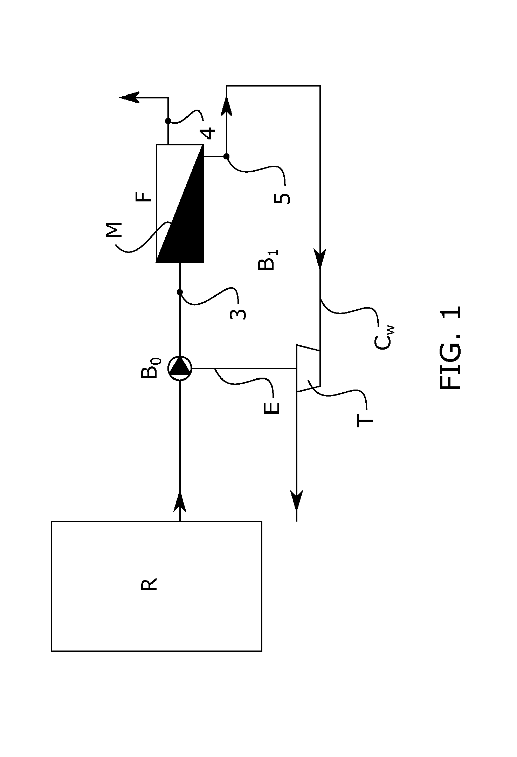

As it will be later described (see figure 1) the easiest way to recover energy from the high pressure brine flow is passing this flow through a turbine.

The turbine delivers energy to the axis pump which boosts the salt water flow to the filter inlet. This energy is supplemented with the energy supplied by an engine of smaller size than the engine needed if the plant has not recovery turbine.

There are devices avoiding the use of a turbine; alternatively, they use a double chamber cylinder. A piston establishes a separation between both chambers and can displace freely backward and forward inside the cylinder. In case there is a pressure difference between both chambers, the piston will move from the high pressure chamber to the low pressure one.

In order to recover the brine high pressure energy, in these devices the brine outflow is introduced into one of the cylinder chambers. The other chamber has been previously filled with salt water that will be used to feed the filter inlet. The brine high pressure is transmitted to the salt water by means of the piston free displacement, raising the salt water pressure to approximately the brine pressure. The salt water pressure does not reach the pressure required at the filter inlet due to internal losses, losses due to piston friction, and pressure losses of the different flow paths. These pressure losses have to be compensated by adding impulsion means in the salt water inflow until reach the necessary pressure. Nevertheless, the pressure difference to be compensated is always much lower than the difference between pressures at the filter inlet and at the salt water reservoir level.

This is a discontinuous process that finishes when the piston reaches its displacement end. At this point it is necessary to return the piston to its initial position (using additional energy), to through away brine from the chamber and refill it with salt water to be filtered. That means that the operation of the intermediate piston implies several disadvantages (filling, empting, valves operation) as well as the piston friction losses.

Separation between both chambers by means of a piston is needed to maintain separated the salt flow from the brine flow, avoiding reintroduce additional salts in the filter when this has eliminate them from the main flow.

However there are known small and compact devices where there is a direct contact between brine and salt water flows, allowing transmission of the high pressure energy from one flow to the other. This interchange is made in small length and small diameter pipes, containing fluid packets with an alternative movement in both senses.

The alternate movement is got by injecting high pressure brine packets at a pipe extreme by means of a rotating valve and, after that, brine are swept out in the opposite sense by salt water injected at the other extreme.

The reduced size of the pipes is imposed by the need to charge the pipes during the rotor turn, and by the fluid packets inertia that need to be put into movement and stopped in each valve operation.

The invention herein presented provides an alternative way to the energy recovery from the brine high pressure outflow, that avoids some of the disadvantages of the state of the art devices; as shown by some examples of the invention, it presents the advantage to have a continuous flow, that implies a lower energy consumption in a system with recovery based on a continuous flow compared to a system with recovery based on alternating or alternate flow. In the examples of the invention it will be shown that water is flowing inside the pipes always in the same sense and without stops. This is due to the double and simultaneous switch of both ends of system pipes and to the presence of by-passes in the high pressure pipes that will be called "load pipes" and "working pipe".

### DESCRIPTION OF THE INVENTION

A first aspect of the invention is a reverse osmosis desalination or filtration plant for salt water taken from a pre-treatment process or from a reservoir with pretreated water. In a practical working example, salt water is taken from the reservoir which has been filled with salt water pre-treated with other process or methods that are not object of this invention, and these methods that will not be mentioned hereafter.

The main application of reverse osmosis (RO) filtering is for desalination of salt water or brackish water, coming for instance from the sea or from an aquifer associated to rock salt, respectively. Brackish water means water with salt content higher than fresh water but lower than sea water.

Nevertheless the invention has more application such as in areas where an input fluid is a solution formed by a solvent and a solute and the use of a RO filter is required to remove molecules with a diameter higher than a given value. The RO filter membrane determines this value, so the matter which can or cannot pass through it.

In this way, in what follows when the words "salt water" are used it is understood to refer generically to fluid to be filtered; when saying "fresh or desalted water" it is understood to refer generically to the fluid filtered by means of the RO filter; when saying "brine" it is understood to refer generically to a fluid with higher solute concentration than the original, due to solute that has not pass the RO filter. In most of the invention uses, this product is thrown away with part of the solvent, as a solution of higher solute concentration than the inlet fluid; however, other uses of the invention, as fruit juice concentrate manufacturing, this product can be the product of interest.

The desalination plant according to the invention comprises:
● *A RO filter which comprises an inlet for feed of salt water, an outlets for desalted water and an outlet for brine.*
   The RO filter is the key component to separate solvent and solute. As mentioned in the previous paragraph, a RO filter has one inlet and two outlets. Independently of the fluid to be filtered, inlet and outlets will be named as: feed inlet of salt water, desalted water outlet as the exit of the filtered water after the membrane passing, and brine outlet as the exit of the more concentrated solution due to solute that has not pass the membrane. This second outlet is the one with the high pressure flow whose energy wants to be recovered.
● *Feed impulsion means connected by pipes so that these means are feed from the salt water reservoir and they feed the water inlet of the RO filter.*
   Those feed impulsion means boost the feed fluid pressure from the reservoir pressure to the necessary work pressure at the RO filter inlet. Those means are responsible of the major energy consumption in the plant.
● *A working pipe connecting the RO filter brine outlet with the salt water feed inlet at a merging point downstream the feed impulsion means where this working pipe has the "increment of pressure" impulsion means, placed either before the pipe reaches the RO filter inlet or at the very merging point with the RO filter inlet.*
   This feedback pipe, named "working pipe", will allow recovering a great deal of the outflow energy coming from the brine outlet.
   Feedback is not direct, since no brine should reach the RO filter inlet but, in accordance with the invention, other pipes and components are inserted according to a determined switching in such a way that the fluid reintroduced in the filter is salt water (fluid coming from the reservoir.
   As mentioned before, the feedback pressure obtained from the brine outlet is not as high as the pressure at the exit of the feed impulsion means; for this reason, the invention device has impulsion means to increase pressure to complement the pressure difference.
   A particular way of impulsion, considered in this invention, makes use of a water ejector to get the "increment of pressure" of the salt water boosted by brine.
   In this case, the "increment of pressure" impulsion means are located at the merging point of the working pipe end and the high pressure salt water filter inlet.
● *A low pressure pipe that connects the salt water reservoir with the main brine exit, where this low pressure pipe is fitted with a "low pressure" impulsion means.*
   The working pipe establishes a feedback loop from the RO filter brine outlet to the RO filter inlet. As indicated, this feedback is not a direct feedback.
   This feedback, by means of the particular invention plan configuration of the invention, allows exploiting the brine exit high pressure but does not introduce brine in the RO filter inlet.
   The invention makes use of a low pressure pipe to obtain a secondary feed of salt water from the reservoir. This pipe is fitted with low pressure impulsion means in order to fill it with salt water from the reservoir. The invention is not modified in the case the feed water is taken from a second reservoir different from the main salt feed water one. The low pressure pipe indirectly connects the salt water reservoir with the main brine exit, through the introduction of a multiple valve capable to switch and insert other intermediate pipes, as will be shown later.
   This salt water coming from the secondary feed water is the one fed back by the brine flow impulsion. In this way, the filter inlet feedback is of salt water (not brine) at a pressure similar to the brine flow pressure. As commented before, there are the "increment of pressure" impulsion means those allowing to equate this pressure, closed to the brine flow pressure, to the RO filter inlet pressure, which is the pressure provided by the feed impulsion means.
● *A load pipe whose length is at least several orders of magnitude greater than its diameter.*
   The load pipe is a key element in the way in which the invention works. In the background section, it has been mentioned the existence of two particular configurations for brine pressure energy recovery, using either pressure chambers separated by a piston or packets of pressure pipes driven by rotating valves. High pressure brine transmit its pressure energy to salt water, either by intercalating a piston between both fluids, or directly by putting in contact both fluids in a narrow place by a very short time. In the state of the art there is always an alternating movement of the two fluids, brine and feed water. The sense of flow, either brine or feed water, changes alternatively. The invention makes use of the so called "load pipe". By means of this pipe and the operation of one or more valves the disadvantage of the alternating flow is avoided. As will be shown in several realization examples, the addition of by-passes diminishes significantly water hammer and energy loss associated with the stop and the inversion in the sense of flow displacement.
   The present invention makes use of the load pipe instead of having a double chamber with an intermediate piston, avoiding the associated disadvantage of management (filling, empty, valves operation) and friction losses of the piston that transfer the pressure energy from one to other chamber.
   This load pipe is used at least in two main stages. In a first stage, the load pipe is filled with salt water through a first stretch of the low pressure pipe, dragging brine to the main brine outlet. These brine results from the previous cycle. Once the load pipe is filled with salt water, by the switching of the "multiple valve", the load pipe inlet communicates with the brine outlet of the RO filter, at high pressure, and the load pipe outlet communicates with the working pipe which drives salt water to the filter inlet.
   In this way, brine transmits the pressure to the fluid inside the load pipe, and from it to the working pipe. The reason to have a load pipe with a length several orders Of magnitude greater than its diameter is to limit the mixing process of brine and salt water boosted by brine. The impulsion by the brine flow of the salt water inside the load pipe means that both fluids are in contact. This contact or mix region is located in a region that increases with time due to the different mixing phenomena produced between the two fluids. Reduced transversal dimensions relative to longitudinal ones establish a limitation in the mixing phenomena. Assuming the mixing of both fluids, the piston friction losses are avoided. Since the characteristic length of the mixing region is limited by the transversal dimension, it is necessary to have a load pipe long enough to get a boosted fluid volume higher than the mixing region volume. A small mixing region volume means that the length of the transition fluid packet (between salt water and brine) is also short. During the plant design phase, it is important to get a short transition length, but an excessively short load pipe implies increased lengths and pressure losses. A good design means a tradeoff between variables.
   As a result of this mixing length limitation, almost the whole salt water introduced in the load pipe is reintroduced in the RO filter. This salt water volume in the load pipe is at the brine pressure, and it only needs a small increment of pressure to reach the RO filter inlet pressure.
   There is a second stage in the recovery process. In this stage and after a multi-valve switch, brine introduced inside the load pipe is thrown away and it is refilled with salt water. Switching in the first and second stages are performed taking into account the arrival of the two front interfaces of brine/salt water (in the first stage) and salt water/brine (in the second stage). The arrival of these interfaces to the load pipe end may be determined in different ways depending on the particular realization of the invention: by pre-computing according to numerical model of the plant, by using salinity sensors, or by means of experimental test.
   As has been already indicated, the control in both stages is performed by a multi-valve. The characteristics of the multi-valve VM and its relation with load pipe, working pipe and low pressure pipe are as follows:
● *A valve VM comprises at least three inlets (i₁, i₂, i₃) and three outlets (o₁, o₂, o₃), and it is designed to connect some specified inlets with some specified outlets, also to close some of these inlets and outlets, and where:*
   o *The valve VM is inserted in the working pipe, connecting it with the first inlet and with the first outlet of the valve.*
   o *One end of the load pipe is connected to the second valve inlet and the other end to the second valve outlet.*
   o *The valve VM is placed between both ends of the low pressure pipe, connecting it with the third inlet and the third outlet of the VM valve.*
   When describing the different circuits proposed in the invention, in particular the low pressure, the load and the working pipes, it was said that these circuits do not connect directly their ends. This fact is caused because the valve VM separates them, and the pipes are related among them depending on the multi-valve switching position.
   The three above mentioned conditions establish the connections between intermediate points of every pipe, where the VM valve is inserted, and the valve VM inlets and outlets.
   The different plant operation modes are established by the way the valve VM inlets and outlets are connected by switching. In this way, *the valve VM is adapted to work at least in two operating positions:*
● *A first switching position serially connects the load and low pressure pipes, in order to thrown away brine from the load pipe, so the third inlet is connected to the second outlet, and the second inlet is connected to the third outlets; and,*
● *A second switching position serially connects load and working pipes in order to recover energy from the brine, so the multi-valve VM first inlet is connected to the second outlets and the second inlet is connected to the first outlet.*
   It does not matter how to name inlets and outlets, the important matter is how the different pipes are connected in both switching positions. The first switching position has been described as the load pipe filling position, pushing out the brine. The second switching position corresponds to the second stage in which salt water inside the load pipe is fed back towards the filter inlet, passing through the working pipe with the help of the increment of pressure impulsion means. It is in this second position when brine exit energy is recovered.
   Switching between both positions is carried out sequentially, driven by control means that manage the changes of the valve VM. It has been already mentioned that switching time can be determined by different ways of invention realization. Among these methods, there is the interface advance time and interface length computation, the experimental test, or the use of sensors to localize salinity changes in a load pipe point before the VM valve in order to drive the switching before this salinity changes reaches the working pipe.

Realization modes resulting from particular realization modes in accordance with the dependant claims 2 to 6 are incorporated by reference to this description.

A second invention aspect is a filtration or desalination water method by means of a device in accordance to the description and also mentioned in claim 1.

The method establishes two main stages that allow alternating between the stage of load pipe filling with salt water and, once filled, to introduce it in the RO filter inlet through the load pipe, harnessing the brine exit pressure.

Both stages make use of the multi-valve (VM) switching capability which originates the two main plant configurations.

The filtration process using a plant according to claim 1 is carried out in such a way that:
*feed impulsion means take salt water from a reservoir, to feed at high pressure the RO filter inlet; RO filter produces fresh water at the first filter outlet; resulting brine that leave the RO filter by the second outlets; brine pressure is high, but lower than feed water pressure; the energy of the high pressure brine flow is the energy to be recovered by the plant.*

The energy recovery process comprises two periodically alternating stages:
● *A load stage: the multi-valve is switched to the first position, causing total or partial filling of the load pipe with salt water from the reservoir; filling is done through the low pressure pipe, dragging and emptying brine from this load pipe through the main brine exit of the low pressure pipe; and,*
● *A production stage: the multi-valve is switched to the second position, causing brine (flowing out from the filter brine outlets) to be introduced by one load pipe extreme for the impulsion of the contained salt water, for the total or partial introduction of the salt water into the working pipe.*

Both main stages may comprise other intermediate stages in order to improve plant operation in real plants. For example, water-hammer can be produced when the multi-valve closes a pipe with high flow. For these cases, it has been planned the use of a bridge or by-pass to allow the flow to by pass the close valve and maintain the circulation helped by the flow inertia.

It is also possible to add more than one load pipe to the plant, as will be later described in realization examples. While a load pipe is replacing brine for salt water, a second load pipe is introducing salt water into the working pipe, recovering energy from the RO filter brine outlet.

The different modes to operate the plant, in accordance with the dependant claims 2 to 18, are also included as reference.

### DESCRIPTION OF DRAWINGS

Those and others invention's advantages and characteristics will be better clarified by a detailed description, following a preferred way of realization, only as an illustrative and no limitative example, with references to the accompanying figures.
- Figure 1:: This figure shows the basic scheme of a RO filtering device with pressure energy recovery, following a realization method already mentioned in the background section.
- Figures 2a, 2b and 2c.: Figures 2a, 2b and 2c show a schematic RO filtering plant following a first invention realization mode. Figure 2a shows schematically the plant with a multi-valve VM, and figures 2b and 2c show the connections established by the multi-valve VM in the two main operating modes.
- Figures 3a, 3b and 3c.: Figures 3a, 3b and 3c show a schematic RO filtration plant following a second invention realization mode. In this second mode two load pipes are combined. Figure 3a schematically shows the valve VM, and figures 3b and 3c show the particular ways to connect different pipes.
- Figure 4.: Figure 4 shows a schematic RO filtration plant following a third invention realization mode, using a plurality of valves VM and load pipes.

### DETAILED EXPOSITION OF THE INVENTION

Figure 1 shows a scheme of a desalination or filtration plant by means of a RO filter F which allows recovering pressure energy, already known in the state of the art.

Through all realization examples description, as it has been indicated in the invention description, some conventions on terms will be used. The fluid to be filtered will be called salt water; the filtered fluid mainly composed of solvent will be called desalted water; and the high pressure residual fluid, with part of solvent and the solute retained by the membrane (M), will be called brine. In this way though terms of a desalination plant are used, the description can be extended to the filtration of any solution formed by a solvent and a solute that requires to be filtered through a RO filter (F).

The reservoir (R) contains salt water to be filtered. Salt water is pushed by the feed impulsion means (B₀) to boost its pressure until reach the filter (F) working pressure and it is conveyed to the salt water feed inlet (3) of filter (F).

Inside the filter (F) two different chambers separated by a membrane (M) are schematically identified. The chamber identified with black color is the one at high pressure in communication with the salt water feed inlet (3) and the output for brine (5). This high pressure outlet (5) has a pressure lower than the salt water inlet (3) pressure since a pressure loss always arises due to the filtration process.

The chamber that receives the filtered water, identified with white color, is in communication with the desalted water outlet (4). Pressure at this chamber is much lower than pressure at the salt water inlet (3) or at the brine outlet (5) since this second chamber is at the other membrane side.

By the desalted water outlet (4) it is obtained the filtered product wanted to obtain by means of the plant.

Brine outlet (5) is at a high pressure and brine is a waste fluid that usually is discharged at the same reservoir (R) but at a spot far enough to avoid the solute already filtered to enter again by the plant inlet. This is the normal situation in desalination plants feed with sea water.

The filter (F) requires the brine outlet (5) to be kept at a high pressure, for this reason it is necessary to put a valve to compensate the difference with atmospheric pressure, or some means to recover energy that can keep this high pressure.

If a valve is used (not shown in the figure) the pressure energy is wasted. Figure 1 shows a state of the art example in which part of the energy is recovered by means of a turbine (T).

The brine outlet (5) is connected to a pipe, called working pipe (C_{W}) that carries the brine outflow to the turbine (T). The working pipe pressure falls at the turbine (T) providing its energy to the turbine axis (E). Energy is recovered by connecting the turbine axis with the axis of feed water impulsion means (B₀).

Feed impulsion means (B₀) requires an impulsion motor to provide energy enough to reach the high pressure needed at the salt water feed inlet (3); however, energy recovery by means of a turbine allows a lower size of this motor and a lower energy consumption in the feed water impulsion means (B₀).

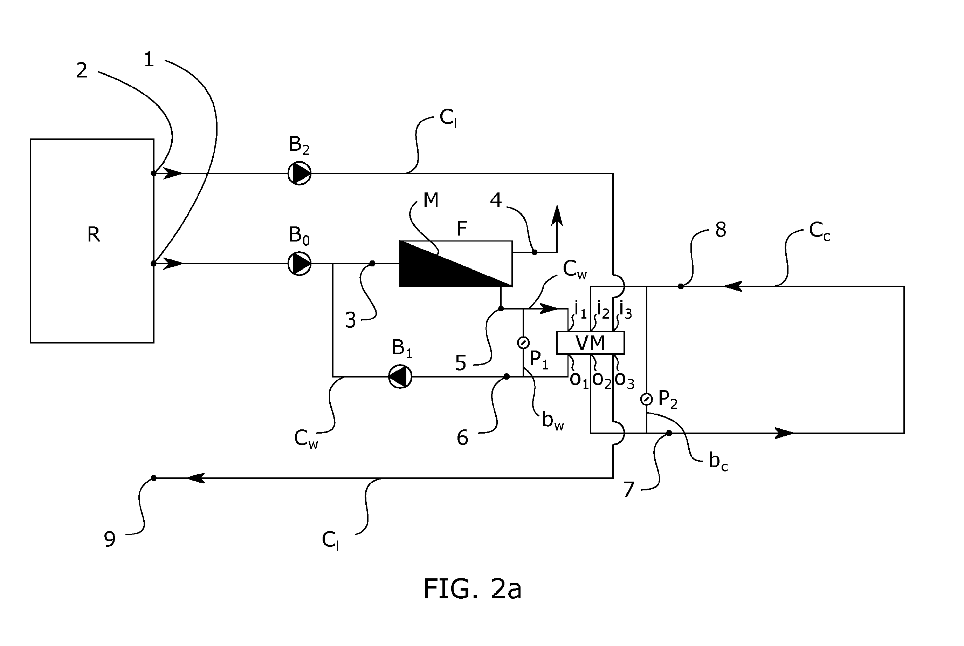

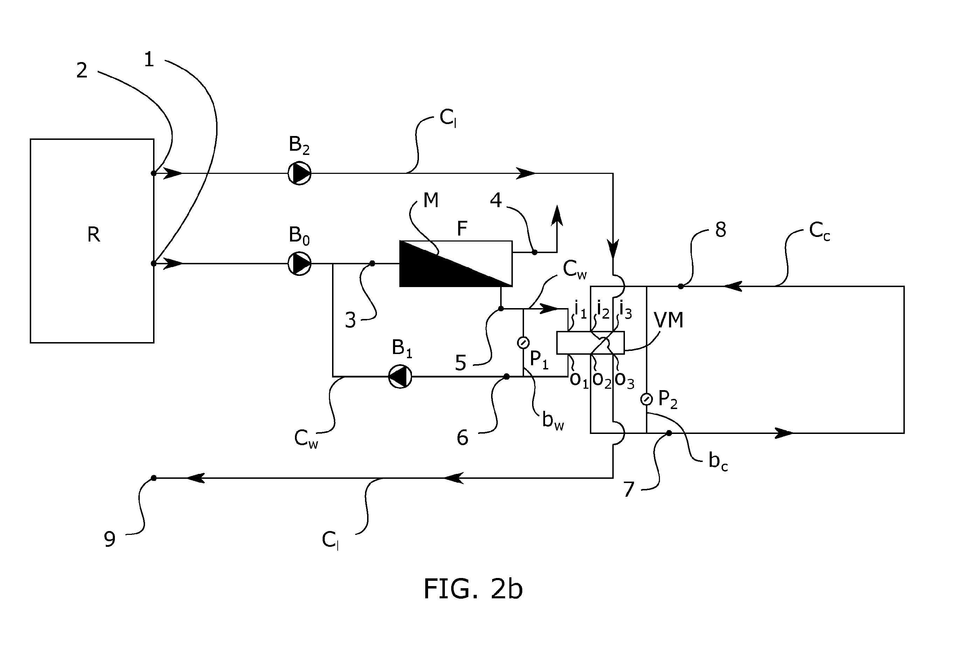

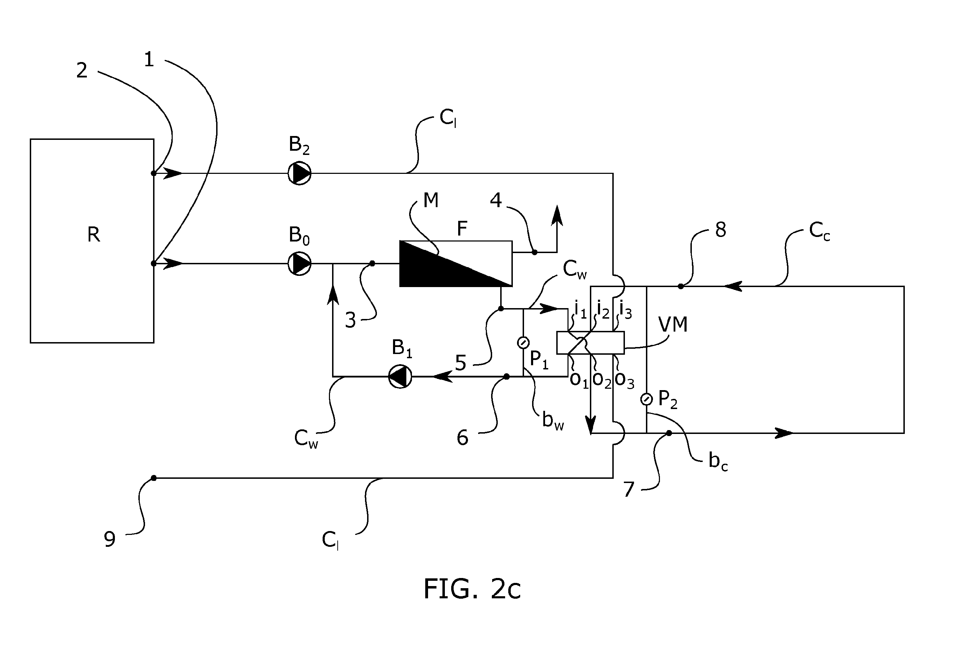

Figure 2 shows a first invention realization example. The elements in figure 2 comprise the ones in figure 1 but now the working pipe (C_{w}) does not end in the reservoir (R) but in the salt feed water inlet (3) of the RO filter, beyond the feed water impulsion means (B₀). Besides this, the working pipe (C_{w}) is fitted with some increment of pressure impulsion means (B₁) providing to the fluid flowing inside the working pipe (C_{w}) the increment of pressure needed to reach the pressure of salt feed water at the RO filter inlet (3).

A multivalve (VM) is inserted between both ends of the working pipe (C_{w}); the multi-valve VM has several inlets (i₁, i₂, i₃) and outlets (o₁, o₂, o₃).

To insert the multi-valve VM in the working pipe (C_{w}) (in the same way as happens in the pipes called load pipe and low pressure pipe (C_{c}, Cₐₗ)) means that each pipe has two stretches, one arriving to the multi-valve (VM) and the other exiting from the multi-valve (VM). In this way, during operation a pipe may be carrying different types of fluids and at different pressures in each of the stretches. In this particular case the working pipe (C_{w}) enters the valve by the first inlet (i₁) of the multi-valve (VM) and exits by its first outlet (o₁).

From the reservoir (R) starts the low pressure pipe (Cₐₗ), intended to feed with additional salt water the RO filter (F), taking advantage of the high pressure brine outlet (5), as will be shown later.

The low pressure pipe (Cₐₗ) is fitted with its own impulsion means that will be called low pressure impulsion means (B₂). The first stretch of the low pressure pipe (Cₐₗ) reaches the third valve VM inlet (i₃); the second stretch goes out through the third valve VM outlet (o₃) finishing in the main brine outlet (9), because this second stretch is intended to evacuate the plant brine. The plant main brine outlet (9) is drawn as an open branch, but it can be ended in the reservoir (R), for instance at a spot far enough from the feed water inlet to avoid introducing brine in the RO filter.

The plant in this invention realization example is equipped with an additional pipe, named load pipe (C_{c}), in which a first end (7) is connected to the multi-valve VM second exit (o₂) and the other end (8) is connected to valve VM second inlet (i₂).

Figures 2b and 2c represent the same scheme but the multi-valve VM shows the way in which its inputs and outputs are connected, as an eyes aid of the flows path in the two main filtration stages.

In all the stages, the RO filter (F) is continuously working. In the stage represented in figure 2b, besides the main water feed (1) from the reservoir (R), the RO filter is fed through the secondary feed (2) of salt water.

In this realization example, both the main feed water inlet (1) and the secondary water inlet (2) are connected to the same reservoir (R), though they can be connected to different reservoirs.

Salt water from the secondary inlet (2) is pushed by the low pressure impulse means (B₂) through the low pressure pipe (Cₐₗ) until the valve VM.

The multi-valve VM shows a first switching mode, in which the third inlet (i₃) is connected to the second output (o₂); and the second input (i₂) is connected to the third output (o₃).

In this switching mode, salt water (coming from the first stretch of low pressure pipe (Cₐₗ)) is introduced into the load pipe (C_{c}) by its first stretch (7), filling fully the load pipe and pushing out the fluid before contained in it. The fluid that was contained in the load pipe (C_{c}) was brine from a previous stage of the cycle. Pushing out brine is possible because the load pipe (Cₐₗ) second end (8) is switched to the low pressure pipe (Cₐₗ) second stretch, from which brine are evacuated through brine main exit (9).

In this stage there is not energy recovery from the RO filter (F) high pressure brine outlet (5).

When the load pipe (C_{c}) is fully filled with salt water, switching is possible for the use of configuration shown in figure 2c.

Once the multi-valve VM has been switched, the high pressure brine flowing out from the RO filter (F) outlet (5) is introduced in the load pipe (C_{c}) by its first end (7). This is clear by observing that the multi-valve VM connects the first inlet (i₁) with the second outlet (o₂).

The brine high pressure is transmitted to the salt water contained in the load pipe (C_{c}). After switching there will be a small stretch or interface in which there is a mix process of brine and salt water.

Since the load pipe (C_{c}) has a length several orders of magnitude greater than its transversal dimension, the length ratio of the mix region to the load pipe length containing only salt water is very small. So, only salt water flows out by the load pipe (C_{c}) second end (8), with the pressure given by brine.

Salt water flowing out by the second end (8) enters the valve VM by the second inlet (i₂) and flows out by the first outlet (o₁), arriving to the second stretch of the working pipe (C_{w}).

Salt water flows, passing the spot marked (6); at this spot there is a high pressure since brine have transmitted their high pressure to salt water, but this pressure is not yet high enough to introduce salt water into the RO filter inlet.

For this purpose, there are "increment of pressure impulsion means (B₁)" that increases pressure to a level high enough to allow the injection of salt water into the salt water feed inlet (3) of RO filter (F).

The load pipe (C_{c}) length determines the time this switching mode has to be kept, since brine pushing the salt water could reach the second final end (8) of load pipe (Cc). If switching mode was not changed, the filter inlet would receive brine that has been pushing the salt water. Once the multi-valve VM has been switched, the plant returns to its initial state, where now feed water arriving from the low pressure pipe (Cₐₗ) replaces brine that has been invading the load pipe (C_{c}), to expulse it through the main brine exit (9).

In this realization example two by-passes or bridges has been added, a load pipe bridge (b_{c}) to by-pass the load pipe (C_{c}) ends (7, 8), and a working pipe bridge (b_{w}) to by-pass both working pipe (C_{w}) stretches. Both bridges (b_{c}, b_{w}) avoid the flow pass through the multi-valve VM. These bridges (b_{c}, b_{w}) can be opened or closed by means of valves (P1, P2). If the valve VM closes the load (C_{c}) or the working (C_{w}) pipes without the possibility to derive the flow arriving to the valve VM, then a water-hammer will be produced that may damage the plant.

The opening of bridges (b_{c}, b_{w}) shortly before closing the flow through the multi-valve (VM) allows that fluid inertia derives the fluid flow through the bridges (b_{c}, b_{w}), avoiding a sudden stop that should produce water-hammer and keeping part of the pipe water kinetic energy.

Bridges (b_{c}, b_{w}) can be closed again as soon as the valve VM allows the serial flow through the pipes, the load (C_{c}) and the working (C_{w}) pipes, or the load (C_{c}) and low pressure (C_{I}) pipes.

In this realization example, when salt water inside the load pipe (C_{c}) is being pushed to the RO filter (F) inlet, it is possible to stop low pressure impulsion means (B₂); and when brine inside the load pipe (C_{c}) is being pushed to the brine outlet, it is possible to stop the high pressure feed impulsion means (B₀). In this realization example, the energy recovery from high pressure brine outlet (5) of filter (F) is only get in one of the stages.

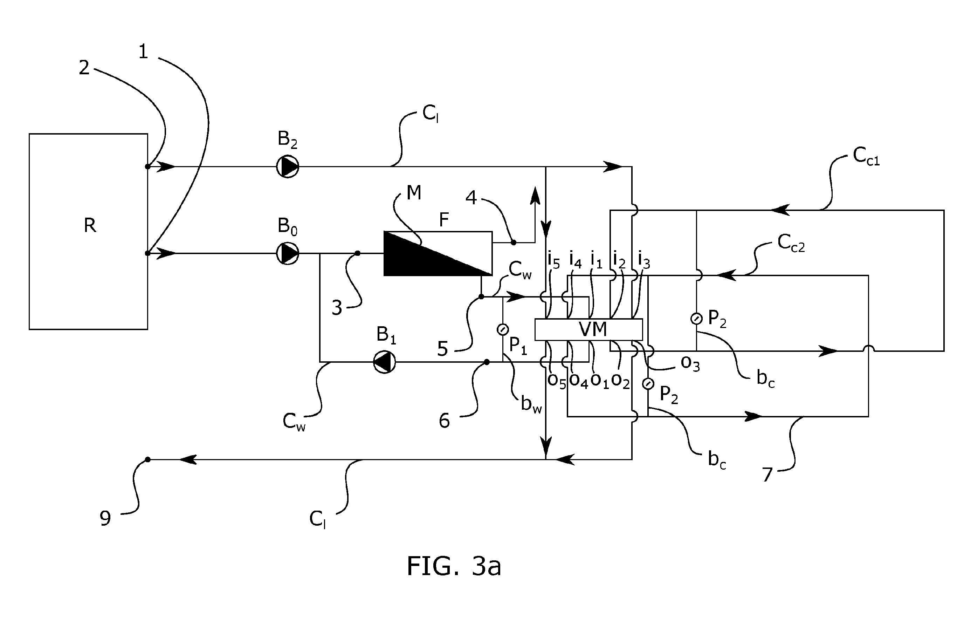

Figure 3a shows a second example of the invention realization combining the use of two load pipes, a first load pipe (C_{c1}) and a second load pipe (C_{c2}). The plant structure is similar to the one described for the first realization example, but the existence of two load pipes (C_{c1}, C_{c2}) requires the existence of five inlets (i₁, i₂, i₃, i₄, i₅) and five outlets (o₁, o_{2,} o₃, o₄, o₅)in the multi-valve (VM). The three first inlets (i₁, i₂, i₃) and outlets (o₁, o₂, o₃) have the same position and works in the same way as described in the scheme of the first realization example for the load pipe (C_{c1}). The second load pipe (C_{c2}) makes use of the fourth inlet (i₄) and outlet (o₄), and the low pressure pipe (C_{I}) has a derivation to connect to the fifth inlet (i₅) and outlet (o₅) in the multi-valve.

In this realization example the multi-valve (VM) offers two possible switching states to the first load pipe (C_{c1}) and two possible switching states to the second load pipe (C_{c2}). Every load pipe (C_{c1}, C_{c2}) works in the same way regarding the unique working pipe (C_{w}). These switching are alternate, so that when the first load pipe (C_{c1}) is being filled with salt water from the low pressure pipe (Cₐₗ), the second load pipe (C_{c2}) is used for energy recovering from the Ro filter (F) brine outlet (5), pushing salt water to the RO filter (F) inlet (3).

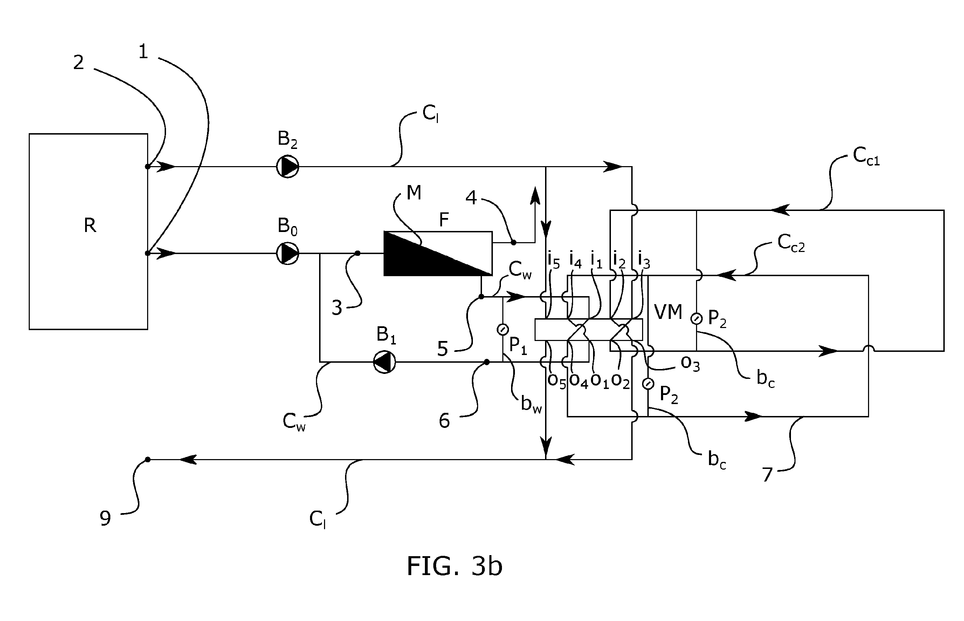

This is the case represented in figure 3b, showing the following connections in the multi-valve (VM):
● the multi-valve (i₂) inlet is connected to the (O₃) outlet,
● the (i₃) inlet is connected to the (o₂) outlet ; these connections establish the first load pipe (C_{c1}) filling, and,
● the (i₄) inlet is connected with the (o₁) outlet,
● The (i₁) inlet is connected to the (o₄) outlet.

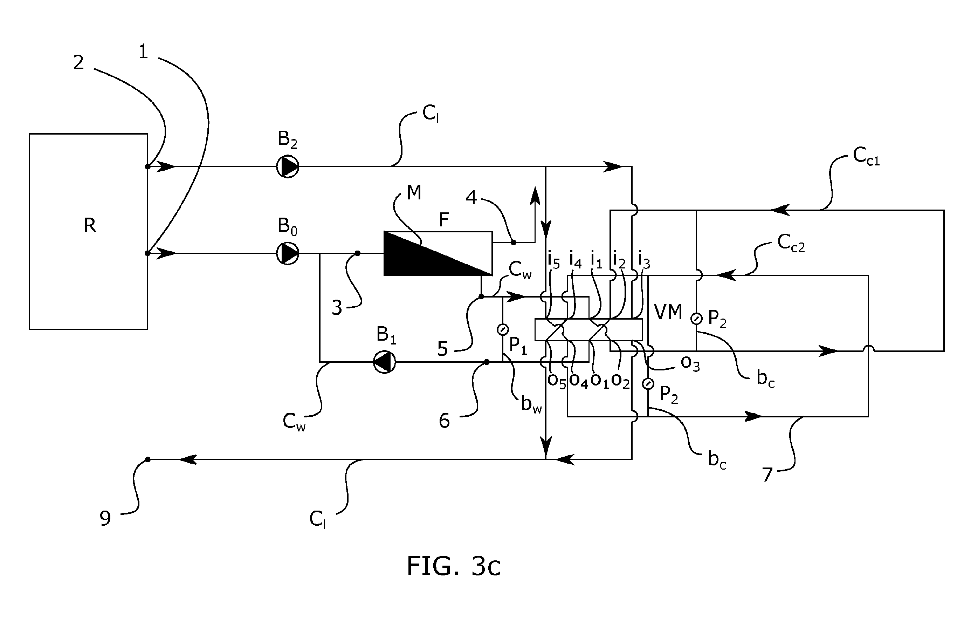

After switching, passing from figure 3b to figure 3c, the role of first load pipes (C_{c1}) and the second load pipe (C_{c2}) are interchanged. So in figure 3c the following connections are established:
● the (i₂) inlet is connected to the (o₁) outlet,
● the (i₁) inlet is connected to the (o₂) outlet,
● the (i₄) inlet is connected to the (o₅) outlet,
● The (i₅) inlet is connected to the (o₄) outlet; these connections establish the second load pipe (C_{c2}) filling.

In this second realization example, the salt water inlet (3) of the RO filter (F) can be continuously receiving salt water pushed by high pressure brine flows out the RO filter, then continuously recovering pressure energy.

This continuity is not complete in practice for several reasons: switching the multi-valve (VM) is not made instantaneously and the multi-valve (VM) should never connect simultaneously the loads pipes (C_{c1}, C_{c2}) with the working (C_{w}) and the low pressure (Cₐₗ) pipes, since in this case the pressure will drop in every pipe. For this reason there must be a short time interval in which the multi-valve (VM) keeps closed all its inlets and outlets. Bridges (b_{c}, b_{w}) switching also requires time; and the mix region also reduces the load pipes (C_{c1}, C_{c2}) effective length.

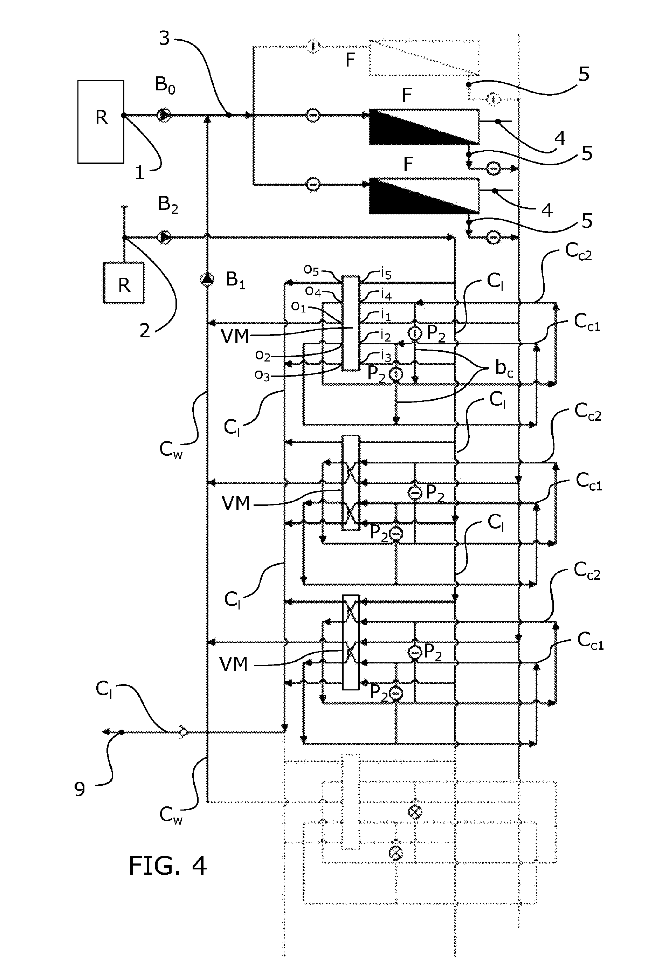

Continuity in pressure energy recovery is get by using more than two load pipes (C_{c}) which are being successively switched or with a more complex switching schedule, as in the realization example shown in figure 4.

In this third realization example, it is shown a multiplicity of RO filters (F) connected in parallel, each one fitted with a pair of valves, at the inlet and the outlet of the filter (F), respectively. In this way a RO filter (F) can be isolated to do maintenance work, keeping the plant in operation with the other filters (F). In this particular case two reservoirs (R) are distinguished, one for the main inlet (1) of salt water and the second for the secondary inlet (2) of salt water feed for the energy recovery process. As mentioned before, it is also possible to use a unique reservoir (R).

Brine outflows (5) from the RO filter (F) plurality converge in a unique pipe. The energy recovery from brine pressure at the exit of the filter group is recovered by using a plurality of multi-valves (VM), each of them managing two load pipes (C_{c1}, C_{c2}). This configuration allows a continuous pressure energy recovery, for two reasons:
● Each multi-valve (VM) switches between two load pipes (C_{c1}, C_{c2}) in such a way that when a first load pipe (C_{c1}) is feeding the RO filter group with high pressure salt water, that is recovering energy, the second load pipe (C_{c2}) is being filled with salt water and eliminating brine. This process supposes a continuous high pressure salt water supply, interrupted only in the short time for switching.
● in this realization example the switching management of each multi-valve (VM), is carried out sequentially, in such a way that interruption period of two valves never overlaps, unless the plant has a great number of multi-valves (VM) and sub-groups of them are managed simultaneously.

The result is a set of multi-valves (VM) whose first outlet (o₁) delivers high pressure salt water to a working pipe (C_{w}) common to all valves (VM), in such a way that the high pressure needed in the salt water RO filter inlet (3) can be reached with a unique increment of pressure impulsion mean (B₁).

Following the same strategy, the low pressure pipe (C_{I}), is filled, through the second inlet (2), with salt water from the reservoir (R) and is common to all the multi-valves (VM) reaching them through their inlets third and fifth (i₃) and (i₅); and the brine, that has already served to push salt water and have been eliminated from the load pipes (C_{c1}, C_{c2}), is poured to the second stretch of the low pressure pipe (C_{I}) through outlets third (o₃) and fifth (o₅) of the different multi-valves (VM).

This same figure shows bridges (b_{c}) for every load pipe (C_{c1}, C_{c2}); in this example, bridges are not needed in the working pipe (C_{w}).

For each one of the realization examples proposed, the aperture order is detailed; it has been already mentioned the possibility to incorporate bridges (b_{c}, b_{w}) to avoid water-hammer and allow harnessing the kinetic energy of the fluids reaching the multi-valve (VM). Before closing the pipes that reaches the multi-valve (VM), its bridges or by-passes (b_{c}, b_{w}) are opened, providing the fluid an alternative way to flow through this bridges (b_{c}, b_{w}). After opening the bridges (b_{c}, b_{w}), the multi-valve (VM) inlets corresponding to the pipes can be closed. Once the switching has been completed, the valve (VM) is already opened, as each pipe is now connected with another pipe that reaches the multi-valve (that is the reason to call the process a switching). After switching the multi-valve (VM, the bridges or by-passes (b_{c}, b_{w}) can be closed to keep the flow circuit defined by the multi-valve (VM) in its new configuration.

There are other additional operations that can be incorporated to the multi-valve (VM) management. One of them is to close the low pressure pipe inlets and outlets in the multi-valve (VM) when this valve is switched to connect the load pipe (C_{c}) with the working pipe (C_{w}). In the same way, it is possible to stop the low pressure impulsion means (B₂) while the multi-valve (VM) has closed their inlets and outlets to the low pressure pipe (Cₐₗ), to avoid wasting the energy used by the low pressure impulsion means (B₂).

Realization examples and filtration procedures has been described for desalination plants when in operational mode. However, it is also important to have methods and procedures to start the plants from an off condition.

In this case the method for filling comprises the following stages:
● *Multi-valve (VM) switching to a first position connecting the load pipe (C_{c}) with the low pressure pipe (C*ₐₗ).
   This switching allows the load pipe filling, in this particular case making use of the secondary inlet (2) of the reservoir R, and this operation will last until all the air or fluid filling the pipe is replaced by salt water.
● *When the load pipe (C_{c}) by-pass (b_{c}) is mounted, then the valve (P₂) (placed in this load pipe (C_{c})) is closed.*
   With this closing the load pipe (C_{c}) reaches its operational configuration.
● *Low pressure impulsion means (B₂) are started.*
   By means of these low pressure impulsion means (B₂) the load pipe is filled. The following-on pressure elevation will be got following the invention working principle, by recovering the brine pressure energy at the filter outlet implemented by the energy provided by the increment of pressure impulsion means (B₁).
   It is possible to provide an air venting to the working pipe (C_{w}) before the salt water feed inlet (3), in order to extract the air that may store the pipe. This air venting will be preferably placed in a high elevation point, forcing the air to accumulate at the point where the venting is placed.
   After starting the low pressure impulsion means (B₂), if necessary, it is possible to open the vent to extract the air from the pipe.
● *If there is a bypass (b_{w}) in the working pipe (C_{w}), the valve (P₁) placed in this pipe is opened.*
   It is necessary to eliminate the air that could be stored in that by-pass.
● *The increment of pressure impulsion means (B₁) is started.*
   These means are located in this installation plant stretch and will displace the fluid through the working pipe (C_{w}).
● *The high pressure feed impulsion means (B₀) are started until the load pipe (C_{w}) is filled.*
   Finally , when the installation is already filled, it is possible to increase the pressure at the salt water feed inlet (3) until it reaches the working pressure needed for the RO filter (F) starts filtering, producing desalted water and high pressure brine which allows operation of the different recovery energy means.

As important as the filling phase, once the plant has been filled, a method or start phase is needed to pass from the filling phase to the production phase where desalted water is produced. The start method comprises the following stages:
● *In the case that the load pipe (C_{c}) was not connected to the working pipe (C_{w}), the multi-valve (VM) is switched to its second position to connect the load pipe (Cₑ) with the working pipe (C_{w}).*
   After filling the installation by means of the low pressure pipe (Cₐₗ), the load pipe (C_{c}) is already filled with salt water and then it is possible to increase its pressure by means of the brine leaving the RO filter brine outlet (5), starting in this way the pressure energy recovery.
   If the configuration is not the basic one and there is more than one load pipe (C_{c}), after the filling phase, all loading pipes will be able to be switched to a position in connection with the working pipe (C_{w}). In operational mode, it is possible that only one of them will be switched and the others will wait to be switched sequentially when their turn arrives.
● *If there are by-passes (b_{c}, b_{w}) in the load (C_{c}) and working pipes (C_{w}) and their valves (P₁, P₂) are opened, then these valves (P₁, P₂) have to be closed;*
   This condition finishes the transition phase of a switching operation. After this stage, the salt water contained inside the load pipe (C_{c}), is switch to connect with the working pipe (C_{w}), and starts to provide feedback to the RO filter inlet, making use both of the brine pressure as well as the increment of pressure impulsion means (B₁).
   *and, additionally, the following stages are performed:*
● *The increment of pressure impulsion means (B₁) are started, if they were stopped.*
   The increment of pressure provided by brine can never reach the pressure needed at the RO filter feed inlet, due to the pressure losses between inlet and outlet. These impulsion means in operation allows the salt water in the feedback loop to reach the pressure at the RO filter salt water feed inlet (3).
● *In case High pressure feed impulsion means (B0) were stopped they are started*.
   In the same way, it is necessary that the high pressure impulsion means (B₀) were in a working state. In this way the operative mode is reached and the plant works as it has been established in the invention.

In a particular realization example of the invention, compatible with the three examples already described, the feed impulsion means (B₀) discharge feed high pressure water in an ejector that works as an increment of pressure impulsion mean. The ejector admission is the working pipe (C_{w}) that reaches the feed water inlet (3), the high pressure feed water is discharged through the ejector nozzle and the ejector is discharged on the RO filter inlet. This discharge is formed by the addition of water coming from the working pipe (C_{w}) and water discharged by the high pressure impulsion means.

In this case the increment of pressure impulsion means (B₁) are the ejector itself. The feed water pump (B₀), that provides water from the reservoir main inlet (1), has to keep the high pressure in the filter (F) primary chamber and has to raise feed water pressure to a value high enough to get the Venturi effect; this effect makes the ejector push the water in the RO filter and the feedback loop, formed by the working pipe (C_{w}), the load pipe (C_{c}), the multi-valve (VM) and the filter (F) primary chamber.

The different invention details, especially those protected under the dependent claims, are considered applicable to each one of the realization examples resulting from the combination of the details. Thereby, the presentation from the simplest case to the most complex one is a way of presentation that takes into account that all basic realization modes are applicable and combinable in more complex configurations.

In all cases the multi-valve or valves (VM) can be composed by a synchronized set of simple valves.

## Claims

1. A reverse osmosis (RO) filtration or desalination plant for salt water coming from a reservoir (R), which comprises:
● a RO filter (F) which comprises a salt water inlet (3), an outlet for desalted water (4) and an outlet for brine (5).
● some high pressure impulsion means (B₀) connected by pipes in such a way that they are fed from the salt water reservoir (R), and they feed the RO filter (F) by its salt water inlet (3).
● a working pipe (C_{w}) connecting the RO filter (F) brine outlet (5) and the RO filter salt water feed inlet (3) in a merging point located down-stream of the feed water impulsion means (B₀); the working pipe (C_{w}) is fitted with some increment of pressure impulsion means (B₁), located up-stream or just at this merging point of the working pipe with the salt water feed inlet (3).
● a low pressure pipe (C_{I}) connecting the salt water reservoir (R) with the main plant brine exit (9), where this low pressure pipe (C₁) is fitted with some low pressure impulsion means (B₂).
● a load pipe (C_{c}) whose length is at least several orders of magnitude greater than its transversal dimensions.
● a multi-valve (VM) which comprises at least three inlets (i₁, i₂, i₃) and three outlets (o₁, o₂, o₃); this valve is manufactured in such a way that it can connect some inlets with some outlets, or can close some of the inlets or outlets (i₁, i₂, i₃, o₁, o₂, o₃);
o the multi-valve (VM) is interposed in the working pipe (C_{w}), in such a way that the working pipe (C_{w}) connects to the first inlet (i₁) and to the first outlet (o₁) of the multi-valve (VM),
o both extremes of the load pipe (C_{c}) are connected one to the second inlet (i₂) and the other to the second outlet (o₂) of the multi-valve (VM),
o the multi-valve (VM) is interposed in the low pressure pipe (C_{I}) in such a way that the low pressure pipe (C_{I}) connects to the third inlet (i₃) and to the third outlet (o₃) of the multi-valve (VM);
wherein the multi-valve VM is adapted to connect at least in two positions:
● a first switching position that serially connects the load pipe (C_{c}) with the low pressure pipe (C_{I}), in order to eliminate brine inside the load pipe (C_{c}), in such a way that the third inlet (i₃) is in communication with the second outlet (o₂), and the second inlet (i₂) is in communication with the third outlet (o₃); and,
● a second switching position that serially connects the load pipe (C_{c}) with the working pipe (C_{w}) to recover energy while in production, in such a way that the first inlet (i₁) is in communication with the second outlet (o₂) and the second inlet (i₂) is in communication with the first outlet (o₁).

2. A plant according to claim 1, **characterised by**:
● it comprises two load pipes (C_{ci}) (with i =1, 2),
● the multi-valve (VM) comprises at least five inlets and five outlets, being adapted to connect some inlets with some outlets, or to close some of the inlets or outlets,
● the multi-valve (VM) is interposed in the working pipe (C_{w}) in such a way that the working pipe (C_{w}) connects with a first inlet (i₁) of the multi-valve (VM) and with a first outlet (o₁) of the multi-valve (VM),
● an extreme of the first load pipe (C_{c1}) is connected with a second inlet (i₂) of the multi-valve (VM) and the other extreme of the first load (pipe C_{c1}) is connected with a second outlet (o₂) of the multi-valve (VM),
● an extreme of the second load pipe (C_{c2}) is connected with a fourth inlet (i₄) of the multi-valve V(M), and the other extreme of the second load pipe (C_{c2}) is connected with a fourth outlet (o₄) of the multi-valve (VM),
● the low pressure pipe (C_{I}) is unfolded in two parallel stretches and the multi-valve (VM) is interposed in between both stretches in such a way that the first stretch is connected with the third inlet (i₃) of the multi-valve (VM), and with a third outlet (o₃) of the multi-valve (VM); and the second stretch is connected to a fifth inlet (i₅) of the multi-valve (VM), and with a fifth outlet (o₅) of the multi-valve (VM), wherein the multi-valve (VM) is adapted to switch at least in two positions for each load pipe (C_{c1}, i=1, 2):
to switch the first load pipe (C_{c1}):
● a first position to connect serially the first load pipe (C_{c1}) with the low pressure pipe (C_{I}) in order to eliminate brine from the load pipe (C_{c1}); for that, the third inlet (i₃) is in communication with the second outlet (o₂) and the second inlet (i₂) is in communication with the third outlet (o₃); and ,
● a second position to serially connect the first load pipe (C_{c1}) with the working pipe (C_{w}) for energy recovering during production; for that, the first inlet (i₁) is in communication with the second outlet (o₂) and the second inlet (i₂) is in communication with the first outlet (o₁).
and to switch the second load pipe (C_{c2}):
● a first connection position to serially connect the second load pipe (C_{c2}) with the low pressure pipe (C_{I}) in order to eliminate brine from the second load pipe; for that, the fifth inlet (i₅) is in communication with the fourth outlet (o₄) and the fourth inlet (i₄) is in communication with the fifth outlet (o₅); and ,
● a second connection position to serially connect the second load pipe (C_{c2}) with the working pipe (C_{w}), for energy recovering during production; for that, the first inlet (i₁) is in communication with the fourth outlet (o₄) and the fourth inlet (i₄) is in communication with the first inlet (o₁).

3. A plant according to claims 1 or 2 wherein the working pipe (C_{w}) has a bridge (b_{w}) with a closing valve (P1) to by-pass the multi-valve (VM).

4. A plant according to claims 1 or 2, **characterized in that** one or more of the load pipes (C_{c}) have a bridge (b_{c}), each bridge is fitted with a closing valve (P₂) to by-pass the multi-valve (VM).

5. A plant **characterized in that** it comprises a plurality of multi-valves (VM), everyone associated with two load pipes (C_{c1}) (i=1, 2), with a working pipe (C_{w}) and with a low pressure pipe (C_{I}); and every multi-valve (VM) as well as the association among every multi-valve (VM) with the pipes (C_{w}, C_{w}, Cₗ) are according to claim 2.

6. A plant according to any of previous claims **characterized by** it comprises a plurality of RO filters (F) mounted in parallel, in such a way that every filter (F) has valves to closed their inlets and outlets for the selection of the operative filters (F).

7. A plant according to any of previous claims **characterized by** the fact that the feed water impulsion means (B₀) comprises an ejector, being this ejector the increment of pressure impulsion means (B₁), in such a way that:
● the feed water impulsion means (B₀) discharge through the ejector nozzle,
● the ejector admission is the working pipe (C_{w}), for pushing the water that will reach the salt water feed inlet (3),
● the ejector nozzle discharge is the high pressure feed water and,
● the ejector exit, formed by the merge of water aspired from the working pipe (C_{w}) and water injected by the nozzle, is discharged into the RO filter (F) inlet.

8. Filtration or water desalination method by means of a device as in claim 1 in which the feed water impulsion means (B₀) feeds with salt water (taken from a reservoir R) the salt water feed inlet (3) of the RO filter (F), which produces desalted water through its desalted water outlet (4) and evacuates high pressure brine (at pressure lower than feed water pressure) through its brine outlet (5); at this outlet (5) it is realised the energy recovery from the high pressure flow at the brine outlet (5), following a method which comprises two periodically alternating stages:
● a load stage: the multi-valve (VM) is switched to its first position, in which the load pipe (C_{c}) is total or partially filled with salt water from the reservoir (R) (through the low pressure pipe (C_{I})), and brine inside the load pipe (C_{c}) are pushed and evacuated (through the low pressure pipe (C_{I})) to the brine main exit (9).
●a production stage: the multi-valve (VM) is switched to its second position; in this way, high pressure brine flowing out from the RO filter (F) outlet (5) are introduced by an end into the load pipe (C_{c}), and by the other end pushes and introduces totally or partially the salt water contained in the load pipe (C_{c}) into the working pipe (C_{w}).

9. Method according to claim 8 **characterised by** the method of changing the multi-valve (VM) from its first to its second switching position and in that change is carried out by establishing pre-computed time intervals.

10. Method according to claim 9 **characterised by** the method of changing the switching valve (VM) from its first and to its second positions. This change is carried out based on salinity measurements taken in different spots of a pipe, in order to know salinity changes and when the interface of two different salinity flows has passed by that measurement spot.

11. Method according to claims 2 and 8 **characterised in that** the filling stage of a first load pipe (C_{c1}) is alternated, in phase or not, with the production stage of a second load pipe (C_{c2}); and the production stage of the first load pipe (C_{c1}) is alternated with the filling stage of the second load pipe (C_{c2}).

12. Method according to claims 3 and 4 and any of claims 8 to 12 **characterised in that**, before the multi-valve (VM) performs switching, the valve (P₁) of working pipe (C_{w}) by-pass (b_{w}) is opened as well as the valve (P₂) of load pipe (C_{c}) by-pass (b_{c}), so avoiding water-hammer and keeping the flow kinetic energy; these valves close again after the valve (VM) switching.

13. Method according to claims 3 and 4 and any of the claims 8 to 12, **characterised in that** the working pipe (C_{w}) inlet and outlet in the valve (VM) are kept closed when this multi-valve (VM) is switched connecting the load pipe (C_{c}) with the low pressure pipe (C_{I}).

14. Method according to claims 3 and 4 and any of the claims 8 to 12 **characterised in that** the low pressure pipe (C_{I}) inlet and outlet in the valve (VM ) are kept closed when this multi-valve (VM) is switched to connect the working pipe (C_{w}) with the load pipe (C_{c}).

15. Method according to claim 14 **characterised in that** the low pressure impulsion means (B₂) keeps stopped when the valve (VM) keeps closed the low pressure pipe (C_{I}) inlet and outlet.

16. Method according to claim 5 and any of claims 8 to 15 **characterised in that** the alternate load and production stages for every load pipes (C_{c}) are synchronised in such a way that the switching of the plurality of load pipes (C_{c}) is sequential.

17. Method of filling a plant according to any of claims 1 to 6 that comprises the following stages:
● switching of the multi-valve (VM) to its first position, connecting the load pipe (C_{c}) with the low pressure pipe (C_{I}),
● if there is the by-pass (b_{c}) in the load pipe (C_{c}), the valve (P₂) placed in this load pipe (C_{c}) closes,
● the low pressure impulsion means (be) starts up,
● if there is the by-pass (b_{w}) in the working pipe (C_{w}), the valve (P₁) placed in the working pipe (C_{w}) opens,
● the increment of pressure impulsion means (B₁) starts up,
● the feed water impulsion means (B₀) are working until the working pipe (C_{w}) is filled.

18. Filling method according to claim 17 **characterised in that** there is a venting in the working pipe (C_{w}) placed before the salt water feed inlet (3); this venting opens after the low pressure impulsion means (B₂) starts up.

19. A plant according to any of claims 1 to 6 that comprises the following stages for each load circuit:
● in the case that the load pipe (C_{c}) is not connected with the working pipe (C_{w}): then, the multi-valve (VM) switches to its second switching position, connecting the load pipe (C_{c}) with the working pipe (C_{w}),
● if there are the by-passes (b_{c}, b_{w}) of the load pipe (C_{c}) and the working pipe (C_{w}), respectively, and if their valves (P₁, P₂) are open, then these valves (P₁, P₂) are close; and
Additionally the plant proceeds with the following steps:
● in case the increment of pressure impulsion means (B₁) were stopped, they start up
● in case the feed water impulsion means (B₀) were stopped, they start up.
